**Europäisches Patentamt**

**European Patent Office**

**Office européen des brevets**

(19)

(11) Veröffentlichungsnummer: **0 357 648 B1**

(12)

# EUROPÄISCHE PATENTSCHRIFT

(45) Veröffentlichungstag der Patentschrift:
**31.07.91 Patentblatt 91/31**

(51) Int. Cl.⁵ : **B25D 17/08, B23B 31/02, B23B 51/00, // G06K19/04**

(21) Anmeldenummer: **88903759.4**

(22) Anmeldetag : **03.05.88**

(86) Internationale Anmeldenummer:
**PCT/DE88/00260**

(87) Internationale Veröffentlichungsnummer:
**WO 88/09245 01.12.88 Gazette 88/26**

(54) **EINRICHTUNG AN HANDWERKZEUGMASCHINEN ZUR DREHMOMENTÜBERTRAGUNG.**

(30) Priorität : **20.05.87 DE 3716915**

(43) Veröffentlichungstag der Anmeldung :
**14.03.90 Patentblatt 90/11**

(45) Bekanntmachung des Hinweises auf die Patenterteilung :
**31.07.91 Patentblatt 91/31**

(84) Benannte Vertragsstaaten :
**AT CH DE FR GB IT LI NL SE**

(56) Entgegenhaltungen :
**EP-A- 0 071 821**
**AT-B- 285 405**

(56) Entgegenhaltungen :
**AU-A- 58 281**
**DE-A- 2 405 938**
**DE-A- 2 551 125**
**DE-A- 3 443 971**
**FR-A- 2 282 323**
**FR-A- 2 526 978**
**GB-A- 2 096 045**
**US-A- 4 335 295**

(73) Patentinhaber : **ROBERT BOSCH GmbH**
**Postfach 10 60 50**
**W-7000 Stuttgart 10 (DE)**

(72) Erfinder : **WANNER, Karl**
**Moltkestr. 10**
**W-7022 Leinfelden-Echterdingen 2 (DE)**

## Beschreibung

### Stand der Technik

Die Erfindung betrifft eine Einrichtung an Handwerkzeugmaschinen nach der Gattung des Hauptanspruchs.

Eine solche Einrichtung ist durch die DE-PS 25 51 125 bereits bekannt. Nach diesem Patent ausgebildete Werkzeuge sind grundsätzlich auch in Werkzeugaufnahmen einsetzbar, die nach der AT-PS 285 405 geschaffen sind, wobei die dort zur Anwendung gelangenden Verriegelungselemente in die im Werkzeugschaft außer den Drehmitnahmenuten angeordneten, beidseitig geschlossenen Ausnehmungen eingreifen. Breite und Tiefe der am Ende des Werkzeugschaftes offen ausmündenden Drehmitnahmenuten sind dabei so gewählt. daß sie die Verriegelungselemente nicht in sich aufnehmen können und das Werkzeug somit nicht falsch eingesetzt werden kann.

Vor allem im harten Baustellenbetrieb kommt es jedoch vor, daß die Drehmitnahmenuten nach längerem Gebrauch des Werkzeugs in einem solchen Maß ausgeschlagen sind, daß das Werkzeug versehentlich auch in einer Stellung in den Werkzeughalter eingesetzt werden kann, in der die Verriegelungselemente in die Drehmitnahmenuten eingreifen. Das bringt die Gefahr mit sich, daß sich beim Zurückziehen der in Betrieb befindlichen Maschine vom Werkstück die Maschine vom Werkzeug unerwartet löst, weil die Verriegelungselemente der Werkzeugaufnahme ungehindert aus den zum Werkzeugende hin offenenen Drehmitnahmenuten herausgleiten können. Dies ist deshalb besonders gefährlich, weil der Bedienungsmann während des Arbeitens mit der Maschine nicht feststellen kann, daß das Werkzeug unter Umständen falsch eingesetzt ist. In diesem Fall wird er es erst — dann aber für ihn völlig unerwartet — bemerken, wenn er die Maschine vom Werkstück zurückzieht und das eventuell im Werkstück festgeklemmte Werkzeug dort steckenbleibt. Weil diese Trennung von Maschine und Werkzeug für den Bedienungsmann völlig unerwartet erfolgt, besteht die Gefahr, daß er das Gleichgewicht verliert, wenn er auf einer Leiter oder einem Gerüst stehend arbeitet, was eine erhebliche Unfallgefahr mit sich bringt.

### Vorteile der Erfindung

Die erfindungsgemäße Einrichtung mit den kennzeichnenden Merkmalen des Hauptanspruchs hat demgegenüber den Vorteil, daß das Werkzeug niemals in einer Stellung in den Werkzeughalter eingesetzt werden kann, in der die in der Werkzeugaufnahme angeordneten Verriegelungselemente in die am Ende des Werkzeugschaftes offen ausmündenden Drehmitnahmenuten eingreifen können, ohne daß hierfür zusätzliche Sperrmittel oder dergleichen zur Anwendung gebracht werden müssen.

Durch die in den Unteransprüchen aufgeführten Maßnahmen sind vorteilhafte Weiterbildungen und Verbesserungen der im Hauptanspruch angegebenen Einrichtung möglich. Besonders vorteilhaft ist es, wenn zwischen den beidseitig geschlossenen Ausnehmungen mehrere Drehmitnahmenuten angeordnet sind, da mit steigender Zahl der Drehmitnahmenuten die spezifische Flächenbelastung beim Übertragen des Antriebsmomentes herabgesetzt wird und damit der Verschleiß um so geringer ist.

Für den Fall, daß eine der Drehmitnahmenuten im Werkzeugschaft tiefer als die anderen Drehmitnahmenuten und der zugehörige leistenförmige Drehmitnehmer der Werkzeugaufnahme entsprechend höher ausgebildet ist, besteht eine weitere vorteilhafte Maßnahme darin, am Einsteckende des Werkzeugschaftes eine kegelförmige Einführschräge vorzusehen, die mit der Werkzeugachse einen Winkel α einschließt und die werkzeugseitigen Stirnseiten der leistenförmigen Drehmitnehmer mit Einführschrägen zu versehen, die mit der Achse der Werkzeugaufnahme einen Winkel β einschließen, der größer ist als der Winkel α. Wenn dazu noch die kegelförmige Einführschräge so dimensioniert ist, daß sie die Grundflächen der weniger tiefen Drehmitnahmenuten anschneidet, während sie die Grundfläche der tieferen Drehmitnahmenut unberührt läßt, so bringt diese Anordnung den Vorteil, daß beim Einführen des Werkzeugs in die Werkzeugaufnahme eine Berührung zwischen Drehmitnahmeleisten und Drehmitnahmenuten erst dann erfolgen kann, wenn zuvor das Werkzeug zur Werkzeugaufnahme solange verdreht wurde, bis der höchste Drehmitnehmer der tiefsten Drehmitnahmenut gegenübersteht. Bis dahin aber gleitet der glatte, das heißt "unverzahnte" Teil der Einführschräge des Werkzeugschaftes über die Einführschräge am höchsten leistenförmigen Drehmitnehmer. Dadurch wird erreicht, daß nur in dieser Stellung das Werkzeug in die Werkzeugaufnahme paßt und die Bedienungsperson nicht durch rastenartiges Eingreifen des höchsten Drehmitnehmers in die weniger tiefen Drehmitnahmenuten irritiert wird.

### Zeichnung

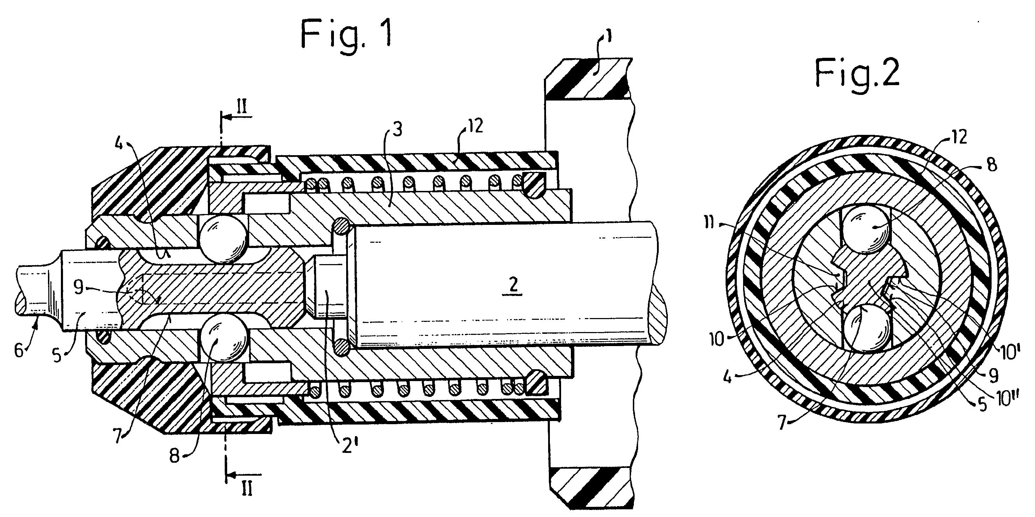

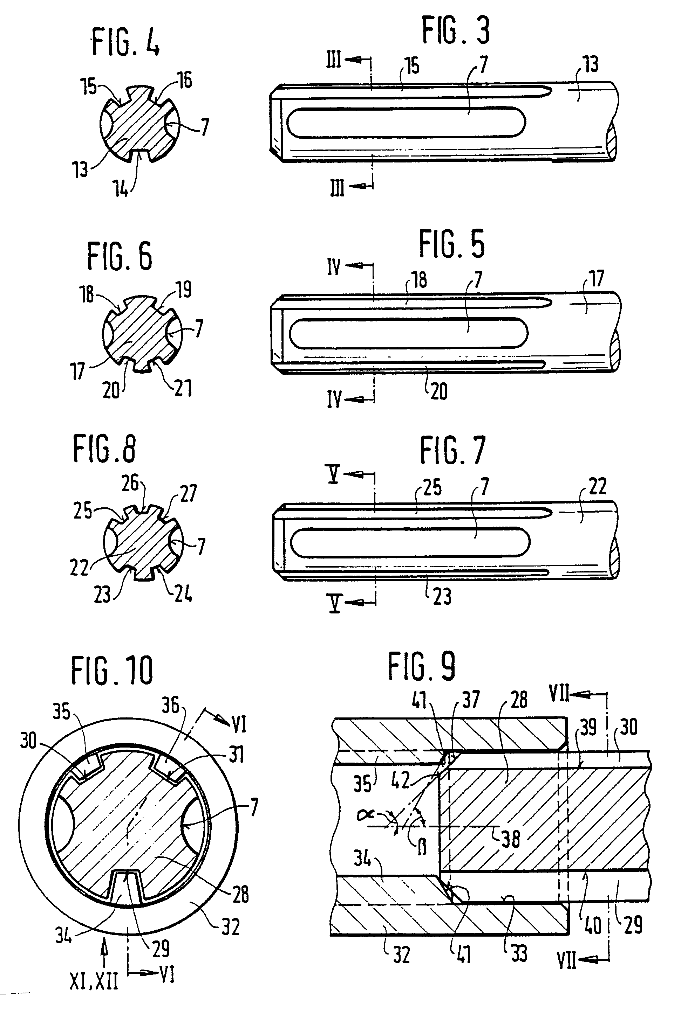

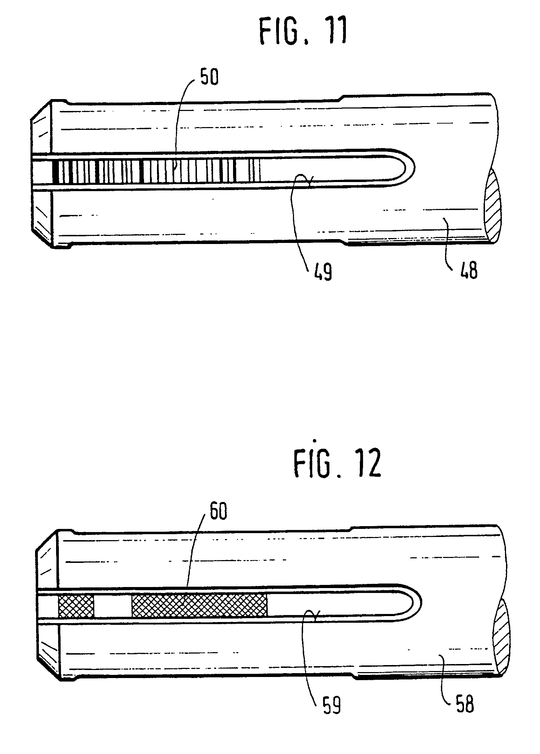

Verschiedene Ausführungsbeispiele der Erfindung sind in der Zeichnung dargestellt und in der nachfolgenden Beschreibung näher erläutert. Figur 1 zeigt einen an einem Bohrhammer angeordneten Werkzeughalter mit eingeführtem Werkzeug im Längsschnitt in vergrößerter Darstellung, Figur 2 einen Querschnitt längs II-II der Figur 1, Figur 3 ein zweites Ausführungsbeispiel eines Werkzeugschaftes in Seitenansicht, Figur 4 einen Querschnitt längs III-III der Figur 3, Figur 5 ein drittes Ausführungsbeispiel eines Werkzeugschaftes in Seitenansicht, Figur 6 einen Querschnitt längs IV-IV der Figur 5, Figur 7 ein viertes Ausführungsbeispiel eines Werkzeugschaftes in Seitenansicht, Figur 8 einen Querschnitt längs V-V der Figur 7, Figur 9 ein fünftes Ausführungsbeispiel eines Werkzeugschaftes in Verbindung mit einem Werkzeughalter im Schnitt gemäß der Linie VI-VI der Figur 10, Figur 10 einen Querschnitt längs VII-VII der Figur 9. Figur 11 zeigt ein sechstes Ausführungsbeispiel eines Werkzeugschafts gemäß XI der Figur 10 und Figur 12 zeigt ein siebtes Ausführungsbeispiel eines Werkzeugschafts gemäß XII der Figur 10.

Beschreibung der Ausführungsbeispiele

Aus dem nur teilweise dargestellten werkstückseitigen Ende des Gehäuses eines Bohrhammers 1 erstreckt sich eine Werkzeugspindel 2. Diese überträgt einerseits ein Drehmoment und andererseits Axialschläge auf eine fest mit ihr verbundene Werkzeugaufnahme 3. In die konzentrische Aufnahmebohrung 4 des Werkzeughalters 3 ist der Werkzeugschaft 5 eines Bohrers 6 eingeschoben. Am Werkzeugschaft 5 sind auf einer Diagonalen gegenüberliegend zwei beidseitig in Achsrichtung geschlossene Ausnehmungen 7 angeordnet, in die zugeordnete, als Kugeln ausgebildete Verriegelungskörper 8 des Werkzeughalters 3 eingreifen. Wie aus Figur 2 zu ersehen ist, haben die rillen- oder nutförmigen Ausnehmungen 7 eine kreiszylindrische Querschnittsform. Die Verriegelungskörper 8 lassen sich durch Axialverschieben einer Hülse 12 aus den Ausnehmungen 7 des Werkzeugschaftes 5 herausbewegen, so daß der Bohrer 6 aus dem Werkzeughalter 3 herausgezogen werden kann. Am Werkzeugschaft 5 sind zusätzlich zu den Ausnehmungen 7 am Ende des Werkzeugschaftes 5 offen ausmündende Drehmitnahmenuten 9 angeordnet. Die Drehmitnahmenuten 9 liegen — wie Figur 2 erkennen läßt — zu den Ausnehmungen 7 um unterschiedliche Winkelbeträge winkelversetzt. Die Drehmitnahmenuten 9 haben zwei zumindest nahezu radial verlaufende, ebene Flanken 10, die mit zugeordneten Flächen leistenförmiger Drehmitnehmer 11, die an der zylindrischen Innenwandung der Aufnahmebohrung 4 der Werkzeugaufnahme 3 angeordnet sind, zusammenarbeiten.

Das hintere Ende des Werkzeugschaftes 5 liegt an einem die Axialschläge übertragenden Döpperfortsatz 2' der Werkzeugspindel 2 des Bohrhammers an. Der vordere, vor dem Werkzeugschaft 5 liegende Teil des Bohrers 6 ist in herkömmlicher Weise ausgebildet, weshalb in der Zeichnung auf eine Darstellung verzichtet worden ist. An einen Hartmetallschneiden aufweisenden Bohrkopf schließt sich ein eine Förderwendel zum Abtransport des vom Bohrkopf losgeschlagenen Bohrkleins enthaltender Teil des Bohrers 6 an.

Wie aus Figur 2 ersichtlich, ist eine der Drehmitnahmenuten 9 zu den Ausnehmungen 7 um etwa 90° winkelversetzt, während die andere Drehmitnahmenut zu den Ausnehmungen 7 asymmetrisch winkelversetzt ist. Aus Stabilitätsgründen ist es zweckmäßig, die Drehmitnahmenut 9 so anzuordnen, daß die im Betrieb Drehmoment übertragende Flanke 10' von der ihr benachbarten Ausnehmung 7 weiter entfernt als die Flanke 10" von der ihr benachbarten Ausnehmung.

Bei Rotation der Werkzeugspindel 2 wird das Drehmoment über die in die Drehmitnahmenuten 9 eingreifenden Drehmitnehmer 11 auf den Werkzeugschaft 5 des Bohrers 6 übertragen. Durch die zumindest nahezu radial verlaufenden ebenen Flanken 10 und die zugeordneten Flächen der leistenförmigen Drehmitnehmer 11 ergeben sich sehr günstige Verhältnisse, da die zu übertragenden Kräfte nahezu normal auf den zusammenarbeitenden Flächen stehen. Die Kraftübertragung geschieht immer — selbst im Zustand fortgeschrittenen Verschleißes — an Flächen und nicht letztlich an Kanten der Ausnehmungen. Die im Werkzeugschaft 5 angeordneten Ausnehmungen 7 dienen lediglich der axialen Verriegelung des Bohrerschaftes in der Werkzeugaufnahme 3. Hierdurch wird die Beanspruchung der als Kugeln ausgebildeten Verriegelungskörper 8 und damit auch ihr Verschleiß sehr stark herabgesetzt.

In den Figuren 3 und 4 der Zeichnung ist ein zweites Ausführungsbeispiel des hier mit 13 bezeichneten Werkzeugschaftes dargestellt. Am Werkzeugschaft 13 sind wiederum Ausnehmungen 7 angeordnet, die den Ausnehmungen 7 des ersten Ausführungsbeispiels (Figuren 1 und 2) entsprechen. Bezogen auf den Umfang des Werkzeugschaftes 13 ist zwischen den beiden Ausnehmungen 7 auf der einen Seite eine Drehmitnahmenut 14 und sind auf der anderen Seite zwei Drehmitnahmenuten 15, 16 angeordnet.

In den Figuren 5 und 6 ist ein Ausführungsbeispiel gezeigt, das sich von demjenigen nach den Figuren 3 und 4 dadurch unterscheidet, daß hier zwischen den Ausnehmungen 7 im Werkzeugschaft 17 jeweils zwei Drehmitnahmenuten 18, 19 ; 20, 21 angeordnet sind.

In den Figuren 7 und 8 ist ein Ausführungsbeispiel gezeigt, bei dem in einem Werkzeugschaft 22 zwischen den Ausnehmungen 7 einerseits zwei (23, 24) und andererseits drei (25, 26, 27) Mitnehmernuten angeordnet sind.

Der Vorteil der Anordnung nach den Figuren 3 bis 8 besteht darin, daß die spezifische Flächenbelastung beim Übertragen des Antriebsmomentes um so geringer ist, je mehr Mitnehmernuten vorhanden sind Um so geringer ist auch der Verschleiß.

Bei Anwendung von mehreren Nuten im Werkzeugschaft kann es vorkommen, daß bei dessen Einsetzen in den Werkzeughalter bzw. bei durch gegenseitiges Verdrehen erfolgendem Aufsuchen der richtigen Bohrerstellung die Stirnseite des Werkzeugschaftes und die Stirnseiten der gegenseitigen Drehmitnehmer rastenartig übereinander gleiten, bis die richtige Einführstellung aufgefunden ist. Dies erschwert nicht nur die Handhabung beim Einsetzen eines Werkzeugs in die Werkzeugaufnahme, sondern irritiert auch die Bedienungsperson. Hier wird durch eine in den Figuren 9 und 10 gezeigte Ausführungsform Abhilfe geschaffen.

Wie aus Figur 9 ersichtlich ist, weist der Werkzeugschaft 28 Drehmitnahmenuten unterschiedlicher Tiefe auf. In dem gezeigten Ausführungsbeispiel steht eine Drehmitnahmenut 29 größerer Tiefe zwei Drehmitnahmenuten 30, 31 geringerer Tiefe gegenüber. An der zylindrischen Innenwandung der Aufnahmebohrung 33 der Werkzeugaufnahme 32 sind leistenförmige Drehmitnehmer 34, 35, 36 angeordnet. Der weiter vorspringende Drehmitnehmer 34 ist für die Zusammenarbeit mit der Drehmitnahmenut 29 bestimmt, die weniger vorspringenden Drehmitnehmer 35, 36 greifen in die Drehmitnahmenuten 30, 31 ein. Der Werkzeugschaft 28 hat an seiner Stirnseite eine kegelförmige Einführschräge 37. Diese schließt mit der Werkzeugachse 38 einen Winkel α ein. Die Schräge 37 ist so dimensioniert, daß sie die Grundflächen 39 der Drehmitnahmenuten 30, 31 anschneidet, während sie die Grundfläche 40 der Drehmitnahmenut 29 unberührt läßt. Die Drehmitnehmer 34, 35 und 36 sind an ihren werkzeugseitigen Stirnseiten mit Einführschrägen 41 versehen, die mit der mit der Achse 38 zusammenfallenden Achse der Werkzeugaufnahme 32 einen Winkel β einschließen. Nach dem Einführen eines Werkzeugschaftes 28 in die Aufnahmebohrung 33 der Werkzeugaufnahme 32 werden in der Regel die Drehmitnahmenuten 29, 30, 31 nicht genau auf die jeweils zugehörigen Drehmitnehmer 34, 35, 36 treffen. Vielmehr ist es notwendig, den Werkzeugschaft 28 in der Aufnahmebohrung so lange um die Achse 38 zu drehen, bis die Drehmitnahmenuten und die Drehmitnehmer einander passend gegenüberstehen und das Werkzeug vollständig in die Werkzeugaufnahme eingeführt werden kann. Bis dahin stützt sich der Werkzeugschaft 28 mit der von seiner Stirnseite in Verbindung mit dem Kegelmantel der Einführschräge 37 gebildeten Kante 42 gegen die Einführschräge 41 des Drehmitnehmers 34 ab. Die Kante 42 bewegt sich während des Drehens des Werkzeugs zügig gleitend über die Einführschräge 41, bis die Drehmitnahmenut 29 dem Drehmitnehmer 34 und die Drehmitnahmenuten 30, 31 den Drehmitnehmern 35, 36 gegenüberstehen und der Werkzeugschaft vollständig in die Werkzeugaufnahme eingeführt werden kann.

In den Figuren 11 und 12 sind zwei weitere Ausführungsbeispiele eines erfindungsgemäß ausgestalten Werkzeugschafts dargestellt. Am Grund der am Ende des Werkzeugschaftes 48, 58 offen ausmündenden Drehmitnahmenuten 49, 59 (vgl. XI, XII in Figur 10) ist eine Kodierung angebracht, die werkzeugabhängige Daten enthält. Diese Daten können sich auf die Werkzeugart — Bohrer oder Meissel — , das Werkzeugabmaß — Bohrerdurchmesser — oder den Werkstoff des Werkzeugs — Bohrer aus Hochleistungswerkzeugstahl oder Bohrer mit Hartmetallplättchen — beziehen.

Bei dem Ausführungsbeispiel nach Figur 11 besteht die Kodierung aus einem mittels eines Farbauftrages angebrachten Strichcodes (Barcode). Bei dem in Figur 12 dargestellten Ausführungsbeispiel ist die Kodierung durch in Streifenform ausgebildete Bereiche mit unterschiedlicher Oberflächenrauhigkeit am Grund der Drehmitnahmenut 59 ausgebildet. Diese Oberflächenrauhigkeit kann einerseits durch chemische Abtragverfahren andererseits aber auch u.a. durch mechanische Erzeugung, z.B. nach Art Feilenhauens hergestellt werden.

Neben diesen beiden Beispielen ist es auch möglich, die Kodierung durch andere geometrische Unterschiede, etwa unterschiedliche Breite der Drehmitnahmenuten erreicht werden.

Die Kodierung wird von an sich bekannten mechanischen oder elektrischen Aufnehmern abgegriffen und in ein mechanisches oder elektrisches Signal umgesetzt, welches entsprechende mechanische oder elektrische Kupplungen schaltet, oder als elektrisches Signal in die Steuerelektronik der Handwerkzeugmaschine eingegeben wird. Hierdurch kann die Vorwahl bestimmter Drehzahlen, Schlagzahlen, Einzelschlagenergie, Ansprechmoment der Sicherheitskupplung, Abschaltung des Bohrerantriebs oder des Schlagwerks, Sanftanlauf oder Veränderungen von sonstigen Maschinenparametern erreicht werden.

Die Anbringung der Kodierung bildet eine zweckmäßige Ausgestaltung der erfindungsgemäßen Werkzeuge, weil nur bei erfindungsgemäß ausgestalteten Schäften von Werkzeugen erreicht werden kann, daß die die Kodierung tragende Drehmitnahmenut oder die die Kodierung tragende beidseitig geschlossene Ausnehmung immer in gleicher Winkelstellung in die zugeordnete Werkzeugaufnahme eingeschoben wird. Dies ist aber notwendig, wenn der mechanische oder elektrische Aufnehmer zum begreifen der Kodierung in der Werkzeugaufnahme getroffen werden soll, um wirksam sein zu können.

**Patentansprüche**

1. Einrichtung an Handwerkzeugmaschinen, insbesondere Werkzeugaufnahme, zur Drehmomentübertragung auf schlagende und/oder bohrende Werkzeuge mit mindestens zwei am Ende des Werkzeugschaftes offen ausmündenden Drehmitnahmenuten und in diese eingreifenden, leistenförmigen Drehmitnehmern der Werkzeugaufnahme mit jeweils zugeordneten, zumindest annähernd ebenen Flanken und mit in der Werkzeugaufnahme angeordneten, mit zwei beidseitig geschlossenen, einander diametral gegenüberliegenden Ausnehmungen im Werkzeugschaft zusammenwirkenden Verriegelungskörpern, dadurch gekennzeichnet, daß die den Drehmitnahmenuten (9, 14, 15, 16, 18-21, 23-27, 29-31, 49, 59) im Werkzeugschaft (5, 13, 17, 22, 28) zugeordneten Drehmitnehmer so über den Umfang der Aufnahmebohrung (4) verteilt sind, daß mindestens zwei Drehmitnehmer (11, 34, 35, 36) gegenüber den Ausnehmungen (7) um unterschiedliche Winkelbeträge winkelversetzt sind.

2. Einrichtung nach Anspruch 1, dadurch gekennzeichnet, daß — bezogen auf den Umfang des Werkzeugschaftes (5, 13. 17, 22, 28) — zwischen den beidseitig geschlossenen Ausnehmungen (7) jeweils eine oder mehrere Drehmitnahmenuten (9, 14, 15, 16, 18-21, 23-27, 29-31, 49, 59) bzw. bezogen auf die Aufnahmebohrung (4) jeweils ein oder mehrere Drehmitnehmer (11, 34, 35, 36) angeordnet sind.

3. Einrichtung nach Anspruch 2, dadurch gekennzeichnet, daß die Anzahl der Drehmitnahmenuten (15, 16, 25, 26, 27, 30, 31), die an dem einen, zwischen den beiden beidseitig geschlossenen Ausnehmungen (7) befindlichen Umfangsteil des Werkzeugschaftes (5, 13, 17, 22, 28) angeordnet sind, größer ist als die Anzahl der am anderen Umfangsteil angeordneten Drehmitnahmenuten (14, 23, 24, 29).

4. Einrichtung nach einem der Ansprüche 1 bis 3, dadurch gekennzeichnet, daß die Drehmitnahmenuten (9, 14, 15, 16, 18-21, 23-27, 29-31) bzw. die Drehmitnehmer (11, 34, 35, 36) im wesentlichen im gleichen axialen Bereich von Werkzeugschaft (5, 13, 17, 22, 28) bzw. Aufnahmebohrung (4) angeordnet sind wie die Ausnehmungen (7) bzw. die Verriegelungskörper (8).

5. Einrichtung nach einem der Ansprüche 1 bis 4, dadurch gekennzeichnet, daß die Drehmitnahmenuten (9, 14, 15, 16, 18-21, 23-27, 29-31) im Werkzeugschaft (5, 13, 17, 22, 28) unterschiedliche Breite und/oder Tiefe und die Drehmitnehmer (11, 34, 35, 36) unterschiedliche Breite und/oder Höhe haben.

6. Einrichtung nach einem der Ansprüche 1 bis 4, dadurch gekennzeichnet, daß eine (29) der Drehmitnahmenuten im Werkzeugschaft (28) tiefer als die anderen Drehmitnahmenuten (30, 31) und der zugehörige leistenförmige Drehmitnehmer (34) der Werkzeugaufnahme (32) entsprechend höher ausgebildet ist als die anderen Drehmitnehmer (35, 36).

7. Einrichtung nach Anspruch 6, dadurch gekennzeichnet, daß der Werkzeugschaft (28) an seinem Einsteckende eine kegelförmige Einführschräge (37) aufweist, die mit der Werkzeugachse (38) einen Winkel α einschließt, während die werkzeugseitigen Stirnseiten der leistenförmigen Drehmitnehmer (34, 35, 36) Einführschrägen (40, 41) aufweisen, die mit der mit der Werkzeugachse (38) gleichlaufenden Achse der Werkzeugaufnahme einen Winkel β einschließen, der größer ist als der Winkel α und daß die kegelförmige Einführschräge (37) so dimensioniert ist, daß sie die Grundflächen (39) der weniger tiefen Drehmitnahmenuten (30, 31) anschneidet, während sie die Grundfläche (40) der tieferen Drehmitnahmenut (29) unberührt läßt.

8. Werkzeug zum Schlagen und/oder Bohren, das zum Einschieben in die Bohrung einer Werkzeugaufnahme eines Bohr- und/oder Schlaghammers vorgesehen ist, wobei an der Wandung der Bohrung leistenförmige, parallel zur Achse der Bohrung verlaufende Drehmitnehmer mit zumindest annähernd ebenen Flächen angeordnet sind, und in mindestens einem radialen Durchbruch in der Wandung der Werkzeugaufnahme ein nach außen bewegbarer Verriegelungskörper angeordnet ist, insbesondere nach einem der Ansprüche 1 bis 7, dadurch gekennzeichnet, daß der Werkzeugschaft (5, 13, 17, 22, 28) zwei beidseitig geschlossene, einander diametral gegenüberliegende Ausnehmungen (7) und — bezogen auf den Umfang des Werkzeugschaftes — zwischen den beidseitig geschlossenen Ausnehmungen (7) jeweils mindestens eine am Ende des Werkzeugschaftes offen ausmündende Drehmitnahmenut (9, 14, 15, 16, 18-21, 23-27, 29-31) hat, wobei diese — mindestens zwei — Drehmitnahmenuten so über den Umfang des Werkzeugschaftes verteilt sind, daß mindestens zwei mit zugeordneten Flächen der Drehmitnehmer (11) zusammenarbeitende Flanken (10) der Drehmitnahmenuten (9, 14, 15, 16, 18-21, 23-27, 29-31) gegenüber den Ausnehmungen (7) um unterschiedliche Winkelbeträge winkelversetzt sind.

9. Werkzeug nach Anspruch 8, dadurch gekennzeichnet, daß mindesten eine der Drehmitnahmenuten (9, 14, 15, 16, 18-21, 23-27, 29-31, 49, 59) und/oder der Ausnehmungen (7) eine Kodierung (50, 60), vorzugsweise mittels eines Formparameters, trägt, die werkzeugabhängige Informationen (z.B Werkzeugart, -abmaß oder -werkstoff des Werkzeugs) enthält.

10. Werkzeug nach Anspruch 9, dadurch gekennzeichnet, daß der Formparameter die Breite und/oder die Tiefe von Drehmitnahmenut (9, 14, 15, 16, 18-21, 23-27, 29-31, 49, 59) und/oder der Ausnehmung (7) ist.

11. Werkzeug nach Anspruch 9 oder 10, dadurch gekennzeichnet, daß in der Drehmitnahmenut (9, 14, 15, 16, 18-21, 23-27, 29-31, 49, 59) und/oder der Ausnehmung (7), vorzugsweise an deren Grund, ein Strichcode (50, 60) als Kodierung angeordnet ist.

12. Werkzeug nach Anspruch 11, dadurch gekennzeichnet. daß der die Kodierung als Formparameter, vorzugsweise durch Rändel, Riefen, Rillen oder sonstige Oberflächenformen erzielt wird.

13. Werkzeug nach Anspruch 11, dadurch gekennzeichnet, daß die Kodierung als Strichcode (50, 60) mittels eines Farbauftrags gebildet ist.

## Claims

1. Device on hand-held power tools, in particular a tool holder, for transmitting torque to percussion and/or drilling tools, having at least two rotary driving grooves opening out at the end of the tool shank and strip-shaped rotary drivers of the tool holder which engage in these rotary driving grooves and have in each case allocated, at least approximately plane flanks, and locking elements arranged in the tool holder and cooperating with two recesses in the tool shank which are closed on either side and are diametrically opposite one another, characterised in that the rotary drivers allocated to the rotary driving grooves (9, 14, 15, 16, 18-21, 23-27, 29-31, 49, 59) in the tool shank (5, 13, 17, 22, 28) are distributed over the periphery of the location bore (4) in such a way that at least two rotary drivers (11, 34, 35, 36) are set at different angles to the recesses (7).

2. Device according to Claim 1, characterised in that — with regard to the periphery of the tool shank (5, 13, 17, 22, 28) — in each case one or more rotary driving grooves (9, 14, 15, 16, 18-21, 23-27, 29-31, 49, 59) are arranged between the recesses (7) closed on either side, and in each case one or more rotary drivers (11, 34, 35, 36) are arranged with regard to the location bore (4).

3. Device according to Claim 2, characterised in that the number of rotary driving grooves (15, 16, 25, 26, 27, 30, 31) which are arranged on one peripheral part of the tool shank (5, 13, 17, 22, 28) located between the two recesses (7) closed on either side is greater than the number of rotary driving grooves (14, 23, 24, 29) arranged on the other peripheral part.

4. Device according to one of Claims 1 to 3, characterised in that the rotary driving grooves (9, 14, 15, 16, 18-21, 23-27, 29-31) and the rotary drivers (11, 34, 35, 36) are essentially arranged in the same axial area of tool shank (5, 13, 17, 22, 28) and location bore (4) respectively as the recesses (7) and the locking elements (8) respectively.

5. Device according to one of Claims 1 to 4, characterised in that the rotary driving grooves (9, 14, 15, 16, 18-21, 23-27, 29-31) in the tool shank (5, 13, 17, 22, 28) have a different width and/or depth and the rotary drivers (11, 34, 35, 36) have a different width and/or height.

6. Device according to one of Claims 1 to 4, characterised in that one (29) of the rotary driving grooves in the tool shank (28) is designed to be deeper than the other rotary driving grooves (30, 31) and the associated strip-shaped rotary driver (34) of the tool holder (32) is designed to be correspondingly higher than other rotary drivers (35, 36).

7. Device according to Claim 6, characterised in that the tool shank (28) has at its insertion end a tapered insertion bevel (37) which encloses an angle $\alpha$ with the tool axis (38), whereas the tool-side end faces of the strip-shaped rotary drivers (34, 35, 36) have insertion bevels (40, 41) which enclose an angle $\beta$ with the tool-holder axis in alignment with the tool axis (38), which angle $\beta$ is larger than the angle $\alpha$, and in that the tapered insertion bevel (37) is dimensioned in such a way that it intersects the base surfaces (39) of the rotary driving grooves (30, 31) of smaller depth, while it leaves the base surface (40) of the deeper rotary driving groove (29) unaffected.

8. Tool for striking and/or drilling which is intended for pushing into the bore of a tool holder of a percussion drill or percussion hammer, strip-shaped rotary drivers being arranged on the wall of the bore, which rotary drivers run parallel to the axis of the bore and have at least approximately plane surfaces, and a locking element which can be moved outwards being arranged in at least one radial aperture in the wall of the tool holder, in particular according to one of Claims 1 to 7, characterised in that the tool shank (5, 13, 17, 22, 28) has two recesses (7) closed on either side and diametrically opposite one another and — with regard to the periphery of the tool shank — in each case at least one rotary driving groove (9, 14, 15, 16, 18-21, 23-27, 29-31), opening out at the end of the tool shank, between the recesses (7) closed on either side, these rotary driving grooves (at least two) being distributed over the periphery of the tool shank in such a way that at least two flanks (10) of the rotary driving grooves (9, 14, 15, 16, 18-21, 23-27, 29-31), which flanks (10) cooperate with allocated surfaces of the rotary drivers (11), are set at different angles to the recesses (7).

9. Tool according to Claim 8, characterised in that at least one of the rotary driving grooves (9, 14, 15, 16, 18-21, 23-27, 29-31, 49, 59) and/or the recesses (7) has coding (50, 60), preferably by means of a shape parameter, which contains tool-dependent information (e.g. tool type, dimensions or material).

10. Tool according to Claim 9, characterised in that the shape parameter is the width and/or the depth of the rotary driving groove (9, 14, 15, 16, 18-21, 23-27, 29-31, 49, 59) and/or of the recess (7).

11. Tool according to Claim 9 or 10, characterised in that a bar code (50, 60) is arranged as coding in the rotary driving groove (9, 14, 15, 16, 18-21, 23-27, 29-31, 49, 59) and/or the recess (7), preferably on its base.

12. Tool according to Claim 11, characterised in that the [sic] the coding, as shape parameter, is obtained preferably by knurling, furrows, flutes or other surface shapes.

13. Tool according to Claim 11, characterised in that the coding, as a bar code (50, 60), is formed by an application of a colour.

## Revendications

1. Dispositif sur des machines outils portatives, notamment sur des raccordements d'outils, pour la transmission du couple à des outils de percussion et/ou des outils de forage, avec au moins deux gorges d'entraînement en rotation ouvertes débouchant à l'extrémité du fût de l'outil, et des organes d'entraînement en rotation du raccordement d'outil en forme de barrettes venant en prise dans ces gorges, avec des flancs associés au moins approximativement plats et avec des structures de verrouillage disposées dans le raccordement d'outil et coopérant avec deux évidements fermés des deux côtés, diamétralement opposés sur le fût de l'outil, dispositif caractérisé en ce que les organes d'entraînement en rotation associés aux gorges d'entraînement en rotation (9, 14, 15, 16, 18-21, 23-27, 29-31, 49, 59) placées sur le fût de l'outil (5, 13, 17, 22, 28) sont répartis sur la périphérie du perçage récepteur (4) de façon qu'au moins deux organes d'entraînement en rotation (11, 34, 35, 36) soient décalés angulairement par rapport aux évidements (7) selon des valeurs angulaires différentes.

2. Dispositif selon la revendication 1, caractérisé en ce que sur la périphérie du fût d'outil (5, 13, 17, 22, 28), entre les évidements (7) fermés des deux côtés, sont disposées respectivement une ou plusieurs gorges d'entraînement en rotation (9, 14, 15, 16, 18-21, 23-27, 29-31, 49, 59) ou bien que sur le perçage récepteur (4) sont disposés respectivement un ou plusieurs organes d'entraînement en rotation (11, 34, 35, 36).

3. Dispositif selon la revendication 2, caractérisé en ce que le nombre des gorges d'entraînement en rotation (15, 16, 25, 26, 27, 30, 31) qui sont disposées sur l'une des parties de la périphérie du fût d'outil (5, 13, 17, 22, 28) entre les deux évidements (7) fermés des deux côtés, est supérieur au nombre des gorges d'entraînement en rotation (14, 23, 24, 29) disposées sur l'autre partie de la périphérie.

4. Dispositif selon une des revendications 1 à 3, caractérisé en ce que les gorges d'entraînement en rotation (9, 14, 15, 16, 18-21, 23-27, 29-31) ou bien les organes d'entraînement en rotation (11, 34, 35, 36) sont disposés essentiellement dans la même zone axiale du fût d'outil (5, 13, 17, 22, 28) ou du perçage récepteur (4) que les évidements (7) ou bien les structures de verrouillage (8).

5. Dispositif selon une des revendications 1 à 4, caractérisé en ce que les gorges d'entraînement en rotation (9, 14, 15, 16, 18-21, 23-27, 29-31) sur le fût d'outil (5, 13, 17, 22, 28) ont des largeurs ou des profondeurs différentes, et que les organes d'entraînement en rotation (11, 34, 35, 36) ont des largeurs et/ou des hauteurs différentes.

6. Dispositif selon une des revendications 1 à 4, caractérisé en ce que l'une (29) des gorges d'entraînement en rotation sur le fût d'outil (28) est plus profonde que les autres gorges d'entraînement en rotation (30, 31) et que l'organe d'entraînement en rotation en forme de barrette (34) qui lui est associé sur le raccordement d'outil (32) est de façon correspondante plus haut que les autres organes d'entraînement en rotation (35, 36).

7. Dispositif selon la revendication 6, caractérisé en ce que le fût d'outil (28) comporte à son extrémité d'enfichage un chanfrein d'insertion conique (37) qui délimite avec l'axe (38) de l'outil, un angle α, tandis que les faces frontales côté outil des organes d'entraînement en rotation en forme de barrettes (34, 35, 36) comportent des chanfreins d'insertion (40, 41) qui délimitent avec l'axe, coïncidant avec l'axe (38) de l'outil, du raccordement d'outil, un angle β, qui est supérieur à l'angle α et que le chanfrein d'insertion conique (37) est dimensionné de façon qu'il s'étende au-delà des surfaces de fond (39) des gorges d'entraînement en rotation les moins profondes (30, 31) tandis qu'il reste en retrait de la surface de fond (40) de la gorge d'entraînement en rotation la plus profonde (29).

8. Outil de percussion et/ou de perçage qui est prévu pour être introduit dans l'alésage d'un raccordement d'outil d'un marteau perforateur et/ou de percussion, raccordement dans lequel des organes d'entraînement en rotation en forme de barrettes s'étendant parallèlement à l'axe de l'alésage, et comportant des surfaces au moins approximativement planes, sont disposés contre la paroi de l'alésage, tandis que dans au moins un ajour radial dans la paroi du raccordement d'outil, est disposée une structure de verrouillage susceptible de se déplacer vers l'extérieur, notamment selon une des revendications 1 à 7, outil caractérisé en ce que le fût d'outil (5, 13, 17, 22, 28) comporte deux évidements (7) fermés des deux côtés, diamétralement opposés l'un à l'autre, et ce fût d'outil comporte, également, sur sa périphérie, entre les évidements (7) fermés des deux côtés, respectivement au moins une gorge d'entraînement en rotation (9, 14, 15, 16, 18-21, 23-27, 29-31) ouverte et débouchant à l'extrémité du fût d'outil, ces gorges d'entraînement en rotation, au moins au nombre de deux, étant réparties sur la périphérie du fût d'outil, de façon qu'au moins deux flancs (10), coopérant avec les surfaces correspondantes des organes d'entraînement en rotation (11), de ces gorges d'entraînement en rotation (9, 14, 15, 16, 18-21, 23-27, 29-31) soient décalés angulairement par rapport aux évidements (7) selon des valeurs angulaires différentes.

9. Outil selon la revendication 8, caractérisé en ce qu'au moins une des gorges d'entraînement en rotation (9, 14, 15, 16, 18-21, 23-27, 29-31, 49, 59) et/ou des évidements (7) portent, de préférence au moyen d'un paramètre de forme, un codage (50, 60) qui contient des informations concernant l'outil (par exemple le type d'outil, la dimension ou le matériau de l'outil).

10. Outil selon la revendication 9, caractérisé en ce que le paramètre de forme est la largeur et/ou la profondeur de la gorge d'entraînement en rotation (9, 14, 15, 16, 18-21, 23-27, 29-31, 49, 59) et/ou de l'évidement (7).

11. Outil selon la revendication 9 ou la revendication 10, caractérisé en ce que dans la gorge d'entraînement en rotation (9, 14, 15, 16, 18-21, 23-27, 29-31, 49, 59) et/ou dans l'évidement (7) est disposé en tant que codage, de préférence dans le fond de cette gorge ou de cet évidement, un code-barres (50, 60).

12. Outil selon la revendication 11, caractérisé en ce que le codage en tant que paramètre de forme est obtenu de préférence, par moletage, par des cannelures, des rainures ou d'autres formes superficielles.

13. Outil selon la revendication 11, caractérisé en ce que le codage en tant que code-barres (50, 60) est réalisé par un apport de couleurs.

Fig. 1

Fig. 2

EP 0 357 648 B1

FIG. 4

FIG. 3

FIG. 6

FIG. 5

FIG. 8

FIG. 7

FIG. 10

FIG. 9

# FIG. 11

# FIG. 12